Europäisches Patentamt

European Patent Office (11) Numéro de publication : **0 110 743**

Office européen des brevets **B1**

(19)

(12) **FASCICULE DE BREVET EUROPÉEN**

(45) Date de publication du fascicule du brevet :
30.12.86

(51) Int. Cl.⁴ : **B 62 D 33/06, E 05 B 65/12**

(21) Numéro de dépôt : **83402053.9**

(22) Date de dépôt : **21.10.83**

(54) **Dispositif de verrouillage.**

(30) Priorité : **16.11.82 FR 8219132**

(43) Date de publication de la demande :
**13.06.84 Bulletin 84/24**

(45) Mention de la délivrance du brevet :
**30.12.86 Bulletin 86/52**

(84) Etats contractants désignés :
**DE GB IT**

(56) Documents cités :
**DE-B- 1 034 062**
**US-A- 4 225 004**

(73) Titulaire : **Pallain, Jacques**
**37, rue Gambetta**
**F-92100 Boulogne (FR)**

(72) Inventeur : **Pallain, Jacques**
**37, rue Gambetta**
**F-92100 Boulogne (FR)**

(74) Mandataire : **Chambon, Gérard et al**
**Cabinet Chambon 6 et 8 avenue Salvador Allende**
**F-93804 Epinay-sur-Seine Cédex (FR)**

Jouve, 18, rue St-Denis, 75001 Paris, France

EP 0 110 743 B1

## Description

L'invention concerne un dispositif de verrouillage pour assujettir deux corps entre eux.

L'invention est plus particulièrement, mais non exclusivement, destinée à fixer de manière amovible la cabine basculante d'un camion au châssis de ce dernier.

Les dispositifs connus comportent généralement un crochet qui vient s'accrocher sur un axe. La forme du boîtier support du crochet sert de moyen de guidage latéral tandis que des moyens de verrouillage sont prévus (forme du crochet, clavette, etc.).

Il est clair que les dispositifs connus de ce type ne présentent qu'un guidage unidirectionnel et il est parfois nécessaire de leur adjoindre d'autres moyens de centrage.

D'autres verrous connus comportent un centrage plus précis des pièces. Ils sont par exemple constitués par un élément mâle de forme générale conique qui vient s'emboîter dans un élément femelle de forme conjuguée tandis qu'un pêne est prévu pour venir traverser et verrouiller les deux éléments. Le pêne est généralement sollicité en permanence dans sa position de verrouillage par un ressort tandis que sa forme permet son effacement lors de l'introduction de l'élément mâle et qu'un moyen est prévu pour venir à volonté retirer ledit pêne à l'encontre de l'effet dudit ressort.

Pour obtenir une meilleure sécurité avec ce type de verrou il est nécessaire d'utiliser d'une part, un ressort assez puissant qui nuit à la facilité d'effacement du pêne et d'autre part, une forme dudit pêne qui ne permet pas un rattrapage de jeu et donc un bon serrage.

C'est pourquoi l'invention propose un dispositif de verrouillage pour assujétir de manière amovible deux corps entre eux et comportant un élément mâle fixé à l'un des corps et destiné à pénétrer un élément femelle de forme conjuguée qui est fixé sur l'autre corps, et un balancier monté pivotant, tandis qu'un pêne est prévu pour venir verrouiller les deux éléments, après l'introduction de l'un dans l'autre, en traversant une ouverture de l'élément mâle, ce dispositif comportant en outre un moyen élastique sollicitant le balancier vers une position de déverrouillage du pêne de telle sorte que l'action dudit élément mâle, au cours de son introduction, entraîne un pivotement du balancier qui sollicite le pêne vers sa position de verrouillage, du type décrit dans le DE-B-1 034 062, et qui est remarquable en ce qu'au moins un système de leviers est articulé de manière à être sollicité par l'élément mâle et à agir sur l'une des extrémités du balancier et sur une came de telle sorte que l'action de l'élément mâle, au cours de son introduction, entraîne au moyen dudit système de leviers, d'une part, le pivotement du balancier qui sollicite ainsi, par son autre extrêmité, le pêne vers sa position de verrouillage et, d'autre part, une rotation de la came vers une position de blocage par butée sur le balancier, tandis que le moyen élastique est aménagé pour solliciter le système de leviers et ainsi le balancier vers la position de déverrouillage du pêne, et qu'un moyen de déverrouillage est prévu pour commander la rotation de la came vers une position de déblocage du balancier.

Lorsque le dispositif selon l'invention est destiné à verrouiller deux corps dont les débattements relatifs nécessitent un centrage de l'un par rapport à l'autre, l'élément mâle présente avantageusement la forme d'un cône à sommet arrondi tourné vers l'élément femelle dont la forme est un tronc de cône conjugué de telle sorte que le sommet arrondi du cône mâle puisse traverser complètement le tronc de cône femelle pour venir solliciter le ou les systèmes de leviers.

Cette disposition est particulièrement avantageuse pour la fixation d'une cabine basculante de camion sur le châssis de ce dernier, surtout lorsque la cabine est munie d'une suspension par coussins d'air qui entraîne nécessairement un flottement de la cabine lors de sa descente. Le guidage et centrage par cônes est multidirectionnel, contrairement aux systèmes à crochets.

Avantageusement, la came présente une zone de contact avec le balancier, à double pentes formant un creux et destinée à coopérer en position de blocage avec un profil arrondi du balancier de telle sorte que ladite came puisse aussi permettre un certain rattrapage de jeu et une sécurité par un blocage accru en cas d'effort intempestif du pêne.

De même, le pêne présente une pente telle qu'il assure un rattrapage de jeu et un serrage de l'élément mâle dans l'élément femelle au cours de son mouvement de verrouillage.

De nombreuses autres particularités et autres moyens apparaîtront à la lecture de la description qui va suivre et qui se réfère au dessin annexé dans lequel :

les figures 1 à 4 montrent schématiquement en coupe, un mode de réalisation selon l'invention dans diverses positions,

la figure 5 est une coupe selon V de la figure 2,

les figures 6 et 7 des détails de la figure 2.

Il est clair que le mode de réalisation qui va être décrit est donné à titre d'exemple nullement limitatif.

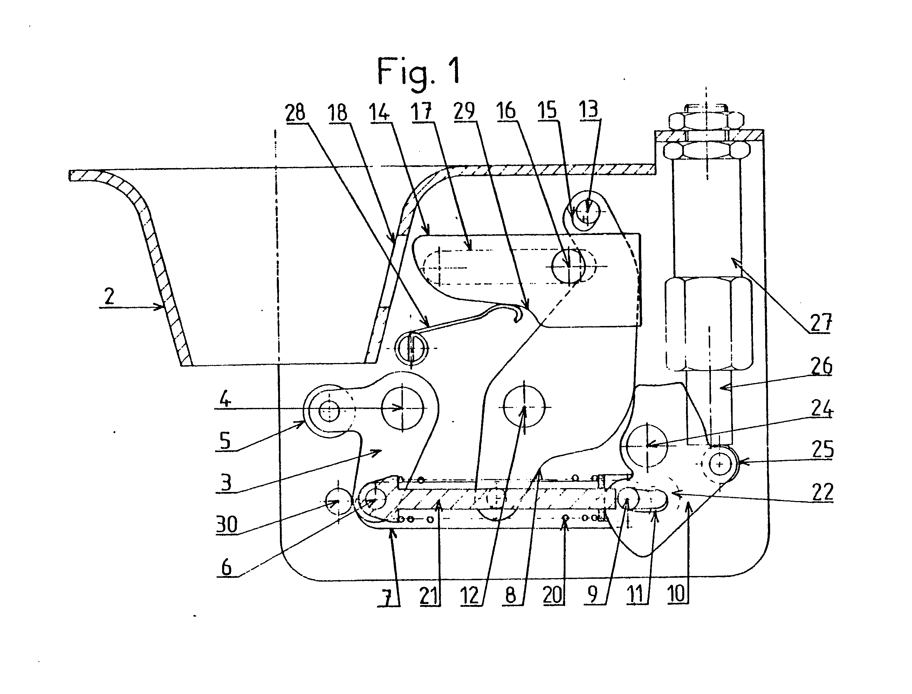

Les figures 1 à 4 montrent un dispositif qui comporte un cône mâle 1 à sommet arrondi, solidaire d'un corps (non représenté) tel qu'une cabine basculante d'un camion et un tronc de cône femelle 2 destiné à recevoir ledit cône mâle et qui est fixé à l'autre corps à assujétir tel que le châssis du camion (cône 1 non visible sur fig. 1).

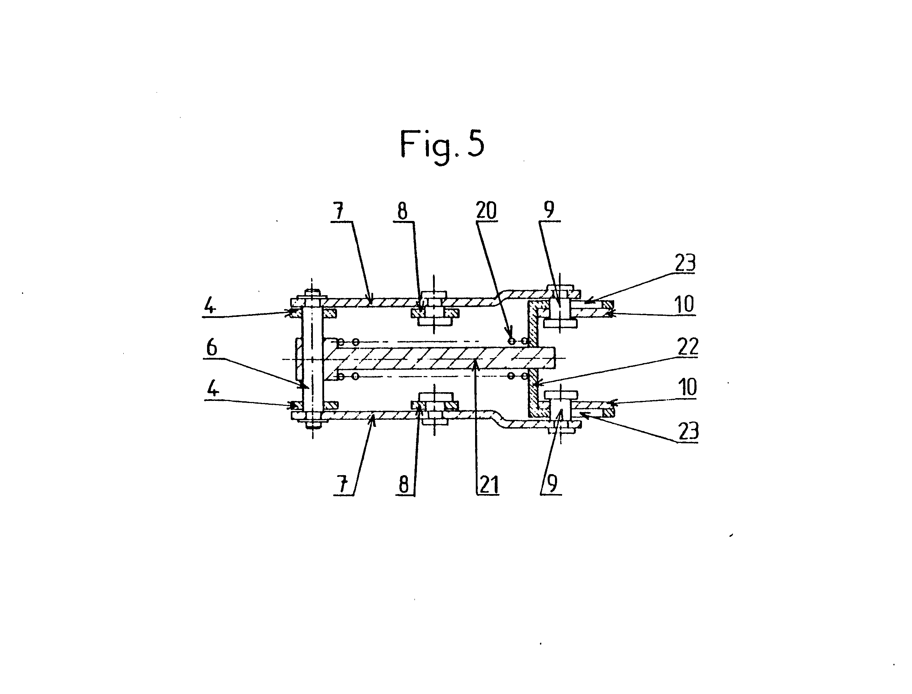

Ce dispositif comporte deux séries de moyens disposés symétriquement selon deux plans parallèles (voir figure 5) alors que les coupes 1 à 4 ne montrent bien sûr qu'une seule série de moyens (les plans parallèles sus-mentionnés étant également parallèles au plan desdites figures 1 à 4).

Le dispositif représenté comporte deux leviers coudés 3 articulés en 4 et qui sont chacun muni à l'une de leurs extrêmités d'un galet 5 tandis qu'ils sont reliés par leur autre extrémité par un axe commun 6 (figure 5).

Les leviers coudés 3 peuvent évidemment être remplacés par tout système de leviers d'un ou plusieurs leviers selon l'encombrement dont on dispose.

Les leviers coudés 3 sont également articulés au moyen de l'axe commun 6 à l'une des extrémités de deux barrettes 7.

Ces dernières sont chacune articulées vers leur milieu à l'une des extrémités d'un balancier tandis que les deux autres extrémités desdites barrettes sont chacune articulée par un petit axe 9 à une came 10, chaque petit axe 9 pouvant débattre dans une lumière courbe 11 ménagée dans la came correspondante.

Les balanciers 8 articulés en rotation en 12 sont articulés chacun sur une pièce 13 solidaire d'un pêne 14 au moyen d'une petite lumière 15.

Le pêne 14 est guidé par une broche 16 dans une lumière 17 ménagée dans une pièce du bâti du dispositif de telle sorte que ledit pêne puisse avoir un mouvement de translation sensiblement perpendiculaire à l'axe de symétrie du tronc du cône 2.

Le tronc de cône 2 est pourvu d'une ouverture 18 pour laisser passer le pêne 14 tandis que le cône 1 qui est ici creux, est muni également dans sa paroi d'une ouverture 19 destinée à recevoir le pêne 14 comme il sera appliqué ci-après.

Un ressort de compression 20 est monté autour d'une tige 21 dont l'une des extrémités est articulée sur l'axe 6 et forme un épaulement de calage du ressort tandis que l'autre extrémité de la tige traverse un étrier 22. L'étrier 22 est en contact permanent sous l'effet du ressort 20 avec les cames 10 tandis qu'il est pourvu de deux lumières oblongues 23 (figure 5) traversées par les axes 9.

Les cames 10 qui peuvent tourner autour d'un axe 24 sont munies chacune d'un galet 25 ou toutes les deux d'un rouleau commun destiné à être sollicité par la tige 26 d'un vérin 27.

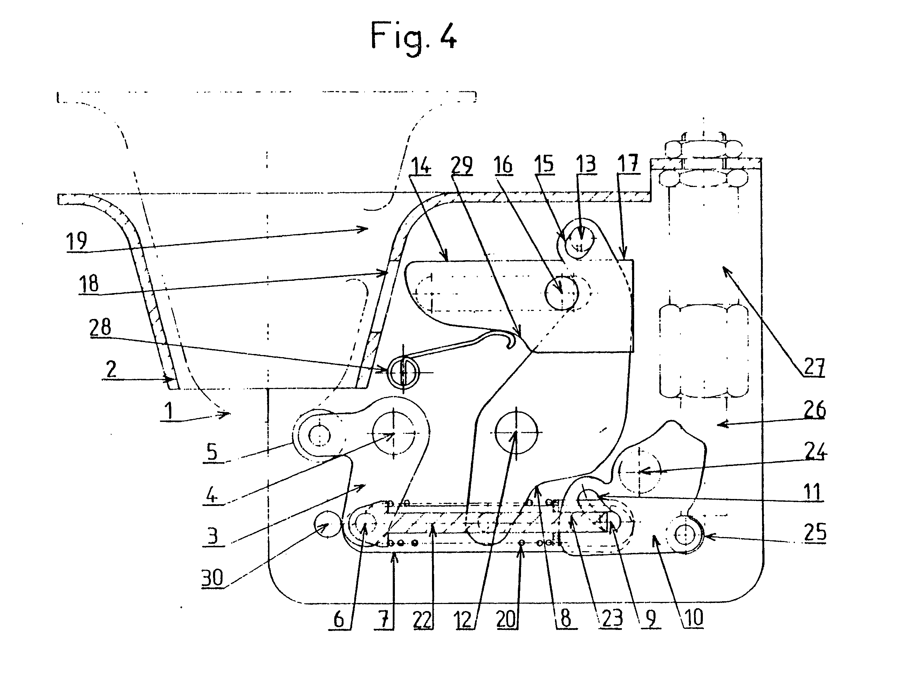

Enfin, un ressort de torsion 28 coopère avec une échancrure 29 du pêne 14 pour maintenir temporairement ce dernier dans la position des figures 1 et 4.

Le fonctionnement est maintenant simple à comprendre.

La figure 1 montre le dispositif avant verrouillage, le cône 1 n'étant pas introduit dans le tronc de cône 2, le ressort de torsion 28 maintenant le pêne 14 par son échancrure 29.

Le mode de réalisation décrit est notamment destiné comme il a déjà été dit, à une cabine basculante et dans ce cas la cabine est tout d'abord descendue par des moyens appropriés vers le châssis pour finir pratiquement en chute libre, de telle sorte que le cône 1 vient naturellement de par sa forme se loger dans le tronc de cône 2. Il est clair qu'une installation complète peut comporter un nombre quelconque de dispositifs tels que celui représenté.

Après avoir débouché du tronc de cône 2, le cône 1 vient solliciter par son sommet les galets 5 des leviers coudés 3 qui sont initialement en contact sur des butées 30.

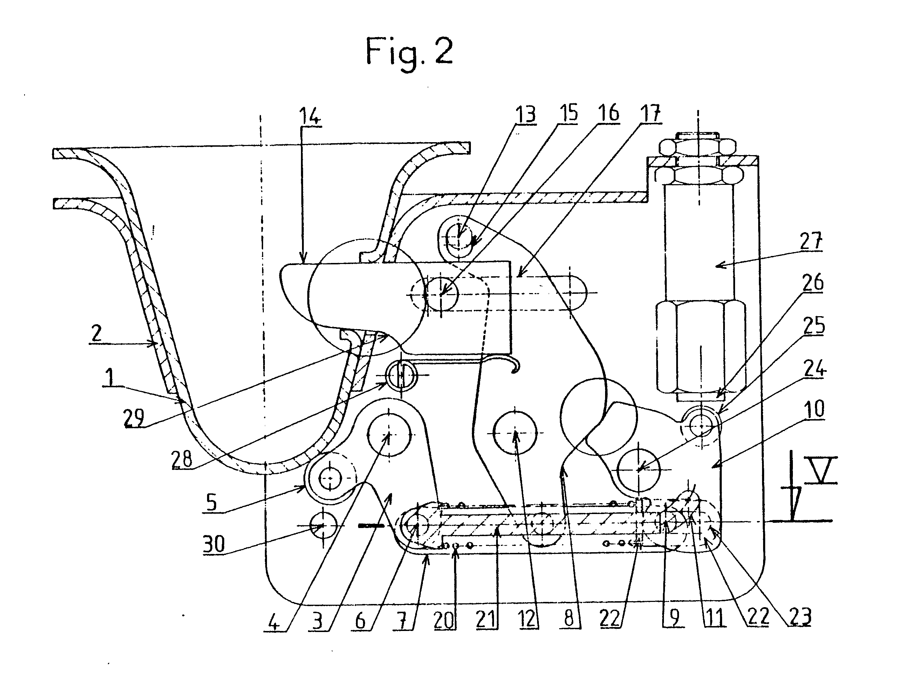

Au cours de l'introduction du cône 1 (voir figure 2), les leviers 3 pivotent autour de 4 et entraînent en mouvement les barrettes 7 qui entraînent alors un pivotement des balanciers 8, les cames 10 étant alors entraînées en rotation (dans le sens trigonométrique positif par rapport au dessin). Sous l'effet de l'étrier 22 sollicité par le ressort 20, la tige 26 du vérin rentre dans son cylindre.

Le pivotement des balanciers 8 autour de l'axe 12 entraîne en mouvement le pêne 14 qui traverse le tronc de cône 2 en passant par l'ouverture 18 et pénètre dans l'ouverture 19 du cône 1, le ressort 28 s'étant alors effacé, comme le montre la figure 2, sous cet effet de pivotement dont la force est plus importante que celle dudit ressort.

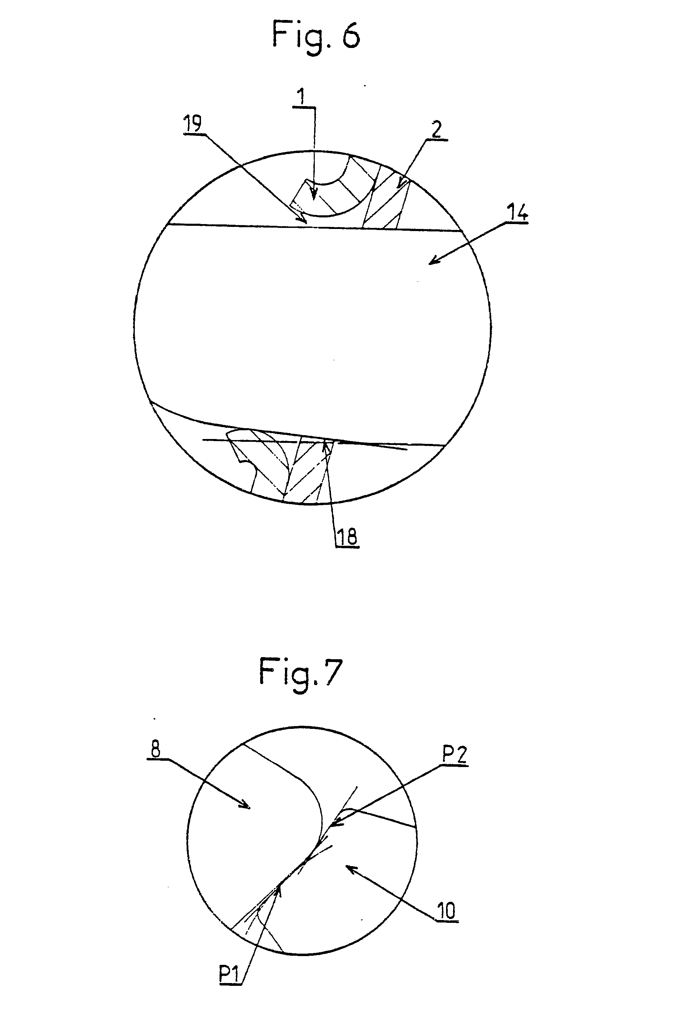

L'introduction du pêne 14 dans le cône 1 est facilitée par sa forme (détail figure 6) et les rebords aménagés autour de l'ouverture 19. En outre, la pente de la partie pénétrante du pêne 14 assure un serrage du cône 1 dans le tronc de cône 2 avec rattrapage de jeu.

Il est à noter que la courbure du pêne 14 est du côté inverse de celui généralement prévu dans les serrures à cônes connus mentionné ci-avant.

En outre le détail de la figure 7 montre que les cames présentent un profil à double pentes P1, P2, formant un creux dans la zone de contact avec les balanciers munis à cet endroit de profils arrondis.

La forme de cette zone est telle que ladite came permet d'une part un certain rattrapage de jeu (serrage de la pente P2) entre les pièces en contact et une sécurité de blocage.

En effet si le cône 1 subit un effort vertical ayant tendance à le faire ressortir du tronc de cône 2, chaque balancier 8 subira, par l'intermédiaire du pêne 14, un effort de pivotement dans le sens trigonométrique négatif, accentuant davantage le verrouillage de la came correspondante par serrage sur la pente P1, la came étant bloquée dans cette position, en rotation de sens positif.

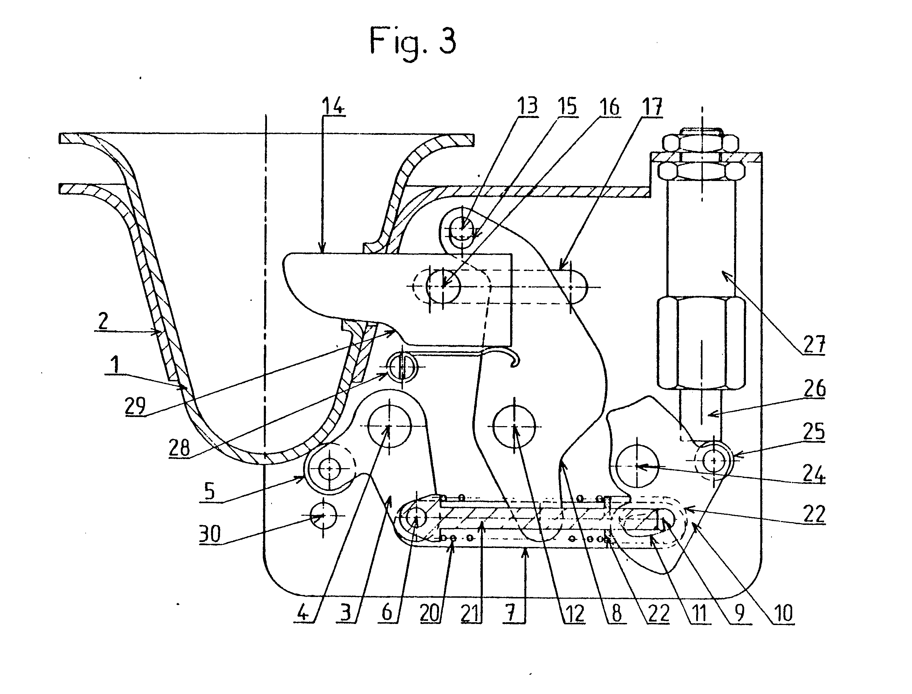

Pour obtenir le déverrouillage du dispositif il suffit d'actionner le vérin 27 (figure 3) de telle sorte que la tige de vérin 26 entraîne une rotation des cames (sens négatif).

Dans un premier temps (figure 2 et figure 3) sur un tiers environ de la course du vérin chaque axe 9 passe d'un fond de lumière 11 de came et d'un fond de lumière 23 d'étrier, dans les autres fonds, avec compression du ressort 20 de telle sorte que les cames se dégagent des balanciers.

La poursuite du mouvement de la tige 26 (figure 4) entraîne toujours la rotation des cames, qui poussent alors par les axes 9, les barrettes 7, l'axe commun 6 et donc les leviers coudés 3. Les leviers 3 tendent à faire ressortir le cône 1 du tronc de cône 2 (qui ont en fait tendance à se séparer par un moyen élastique non représenté qui est disposé entre la cabine et le châssis du camion). Il est clair en outre que le mouvement

des barrettes 7 entraîne conjointement un pivotement des balanciers 8, un mouvement d'ouverture du pêne 14, tandis que le ressort de torsion 28 vient reprendre sa place dans l'échancrure 29 du pêne, et que les leviers 3 reviennent au contact des butées 30.

Dans cette position (figure 4), le ressort de compression 20 en appui fixe sur l'axe 6 entraîne au moyen de l'étrier 22 les cames en rotation positive en repoussant la tige 26, lesdites cames revenant en appui sur les balanciers et les axes 9 reprenant leur position initiale dans les lumières 11 des cames et 23 de l'étrier (figure 1).

Il est clair que de nombreuses modifications peuvent être imaginées sans sortir du cadre de l'invention. Ces modifications peuvent toucher les formes des pièces et même leur agencement.

C'est ainsi, par exemple, que les leviers 3 peuvent être remplacés par de véritables systèmes de plusieurs leviers afin de disposer les pièces de manière différente selon les applications envisagées. De même le moyen de déverrouillage peut être aussi pneumatique, électrique ou manuel etc...

## Revendications

1. Dispositif de verrouillage pour assujétir de manière amovible deux corps entre eux et comportant un élément mâle (1) fixé à l'un des corps et destiné à pénétrer un élément femelle (2) de forme conjuguée qui est fixé sur l'autre corps, et un balancier (8) monté pivotant, tandis qu'un pêne (14) est prévu pour venir verrouiller les deux éléments, après introduction de l'un dans l'autre, en traversant une ouverture (18) de la paroi de l'élément femelle et en pénétrant dans une ouverture (19) de l'élément mâle, ce dispositif comportant en outre un moyen élastique sollicitant le balancier vers une position de déverrouillage du pêne, de telle sorte que l'action dudit élément mâle, au cours de son introduction, entraîne un pivotement du balancier qui sollicite le pêne vers sa position de verrouillage, dispositif caractérisé en ce qu'au moins un système de leviers (3) est articulé de manière à être sollicité par l'élément mâle et à agir sur l'une des extrémités du balancier (8) et sur une came (10) de telle sorte que l'action de l'élément mâle, au cours de son introduction, entraîne au moyen dudit système de leviers, d'une part, le pivotement du balancier (8) qui sollicite ainsi, par son autre extrémité, le pêne (14) vers sa position de verrouillage et, d'autre part, une rotation de la came vers une position de blocage par butée sur le balancier, tandis que le moyen élastique (20) est aménagé pour solliciter le système de leviers et ainsi le balancier vers la position de déverrouillage du pêne, et qu'un moyen de déverrouillage (26, 27) est prévu pour commander la rotation de la came vers une position de déblocage du balancier.

2. Dispositif selon la revendication 1, caractérisé en ce que l'élément mâle présente la forme d'un cône (1) à sommet arrondi et tourné vers l'élément femelle dont la forme est un tronc de cône (2) conjugué de telle sorte que le sommet arrondi du cône mâle puisse traverser complètement le tronc de cône femelle pour venir solliciter le ou les systèmes de leviers (3).

3. Dispositif selon l'une des revendications 1 à 2, caractérisé en ce que la came (10) présente une zone de contact avec le balancier, à double pentes (P1, P2) formant un creux et destinée à coopérer en position de blocage, avec un profil arrondi du balancier de telle sorte que ladite came puisse permettre un certain rattrapage de jeu et une sécurité par un blocage accru en cas d'effort intempestif du pêne (14).

4. Dispositif selon l'une des revendications 1 à 3, caractérisé en ce que le pêne (14) présente une pente telle qu'il assure un rattrapage de jeu et un serrage de l'élément mâle dans l'élément femelle au cours de son mouvement de verrouillage.

5. Dispositif selon l'une des revendications 1 à 4 caractérisé en ce qu'un moyen élastique (28) est prévu pour retenir temporairement le pêne (14) en position déverrouillée, ledit moyen s'effaçant ou cessant son action au cours du mouvement de verrouillage du pêne.

6. Dispositif selon l'une des revendications 1 à 5 caractérisé en ce que le système de leviers comporte au moins un levier (3) destiné au contact avec l'élément mâle et qui est articulé à une barrette (7), elle-même articulée, d'une part à l'une des extrémités du balancier (8), et d'autre part sur la came (10).

7. Dispositif selon la revendication 6 caractérisé en ce que la barette (7) est articulée sur la came (10) au moyen d'un axe (9) solidaire de ladite barrette et qui traverse une lumière (11) ménagée dans ladite came de telle sorte que le déblocage de la came est obtenu par l'action du moyen de déverrouillage (26, 27) qui entraîne une rotation inverse de la came, par rapport à sa rotation de blocage, ledit axe (9) passant d'un fond de lumière à l'autre avant de revenir à sa position initiale sous l'action du moyen élastique (20), au cours de la séparation des deux corps.

8. Dispositif selon l'une des revendications 6 et 7 caractérisé en ce que le dispositif comporte deux systèmes de leviers (3), deux balanciers (8), deux barrettes (7) et deux cames (10) disposés symétriquement selon deux plans parallèles, le moyen élastique (20) étant calé entre les systèmes de leviers et les cames tandis qu'un axe commun (6) relie les deux systèmes de leviers et sur lequel est articulée l'une des extrémités des deux barrettes (7.)

9. Dispositif selon la revendication 8 caractérisé en ce que le moyen élastique est un ressort de compression (20) calé entre l'axe commun (6) des systèmes de leviers et un étrier (22) en contact permanent, sous l'effet dudit ressort (20), avec les deux cames (10) tandis que les axes d'articulation (9) des cames avec les barrettes peuvent également débattre dans des lumières (23) ménagées dans l'étrier.

## Claims

1. A locking device for detachably securing two bodies together and comprising a male element (1) fixed to one of the bodies designed to pass into a female element (2) of corresponding shape which is fixed to the other body, and a rocker (8) mounted so that it can pivot, whereas a latch (14) is provided to lock the two elements, after the introduction of one in the other, by passing through an opening (18) in the wall of the female element and by passing into an opening (19) in the male element, this device also comprising an elastic means pulling the rocker towards a latch unlocking position, such that the action of said male element, in the course of its introduction, causes the rocker to pivot which pulls the latch towards its unlocking position, this device being characterised in that at least one system of levers (3) is articulated so as to be pulled by the male element and to act on one of the ends of the rocker (8) and on a cam (10) such that the action of the male element, in the course of its introduction, through said system of levers, firstly causes the rocker (8) to pivot which thus, through its other end, pulls the latch (14) towards its locking position, and secondly causes the cam to rotate towards a locking position by bearing on the rocker, whereas the elastic means (20) is arranged to pull the system of levers and thus the rocker towards the latch unlocking position, and in that an unlocking means (26, 27) is provided to control the rotation of the cam towards a rocker releasing position.

2. A device as in Claim 1, characterised in that the male element exhibits the shape of a cone (1) with a rounded apex facing towards the female element the shape of which is a corresponding truncated cone (2) such that the rounded apex of the male cone can pass completely through the female truncated cone to act on the system or systems of levers (3).

3. A device as in one of Claims 1 to 2, characterised in that the cam (10) exhibits a zone of contact with the rocker with two gradients (P1, P2) forming a hollow and designed to cooperate in the locked position with a rounded profile on the rocker such that said cam can allow some elimination of play and security through increased locking in the event of a sudden loading on the latch (14).

4. A device as in one of Claims 1 to 3, characterised in that the latch (14) exhibits a gradient such that it eliminates play and holds the male element in the female element in the course of its locking movement.

5. A device as in one of Claims 1 to 4, characterised in that an elastic means (28) is provided to temporarily hold the latch (14) in the unlocked position, said means moving aside or stopping its action in the course of the latch locking movement.

6. A device as in one of Claims 1 to 5, characterised in that the system of levers comprises at least one lever (3) designed to make contact with the male element and articulated to a strip (7) which is itself articulated firstly to one of the ends of the rocker (8) and secondly on the cam (10).

7. A device as in Claim 6, characterised in that the strip (7) is articulated on the cam (10) by means of a shaft (9) which is integral with said strip and passes through an opening (11) formed in said cam such that the release of the cam is obtained through the action of the unlocking means (26, 27) which causes the cam to rotate in the reverse direction relative to its locking rotation, said shaft (9) passing from one end of the opening to the other before returning to its initial position under the action of the elastic means (20) in the course of separation of the two bodies.

8. A device as in one of Claims 6 and 7, characterised in that the device comprises two systems of levers (3), two rockers (8), two strips (7) and two cams (10) disposed symmetrically in two parallel planes, the elastic means (20) being located between the systems of levers and the cams, whereas a common shaft (6) links the two systems of levers and carries one of the ends of the two strips (7) articulated on it.

9. A device as in Claim 8, characterised in that the elastic means is a compression spring (20) located between the common shaft (6) of the systems of levers and a stirrup (22) in permanent contact with the two cams (10) under the action of said spring (20), whereas the shafts (9) through which the cams articulate with the strips can also move in the openings (23) formed in the stirrup.

## Patentansprüche

1. Verriegelungsvorrichtung zur Herstellung einer unbewegbaren Verbindung zwischen zwei Körpern, mit einem männlichen Element (1), das an einem der Körper befestigt und dazu bestimmt ist, ein weibliches Element (2) zugeordneter Form zu durchdringen, das am anderen Körper befestigt ist und mit einem schwenkbar befestigten Schwinghebel (8), während zum Verriegeln der beiden Elemente nach Einführung des einen in das andere ein Zapfen (14) vorgesehen ist, der eine Öffnung (18) in der Wand des weiblichen Elementes durchdringt und in eine Öffnung (19) des männlichen Elementes eindringt, wobei die Vorrichtung außerdem ein elastisches Mittel aufweist, welches auf den Schwinghebel eine in Richtung einer Entriegelungsstellung des Zapfens wirkende Kraft ausübt, derart, daß die Einwirkung des besagten männlichen Elementes im Laufe seiner Einführung eine Schwenkung des Schwinghebels bewirkt, die auf den Zapfen eine Kraft in Richtung auf seine Verriegelungsstellung ausübt, dadurch gekennzeichnet, daß mindestens ein Hebelsystem (3) gelenkig so angeordnet ist, daß es durch das männliche Element eine Kraftwirkung erfährt und auf eines der Enden des Schwinghebels (8) und auf einen Nocken (10) derart einwirkt, daß die Einwirkung des männlichen Elementes im Laufe seiner Einführung über das besagte Hebelsystem einerseits die Schwenkung des Schwinghebels (8) bewirkt, der auf diese Weise mit seinem anderen Ende eine Kraft auf den Zapfen (14) in Richtung auf dessen Verriegelungsstellung ausübt, und andererseits eine Drehung des Nockens in eine Blockierstellung durch Anliegen am Schwinghebel bewirkt, während das elastische Mittel (20) so angeordnet ist, daß es auf das Hebelsystem und damit auf den Schwinghebel eine Kraft in Richtung der Entriegelungsstellung des Zapfens ausübt und daß Entriegelungsmittel (26, 27) vorgesehen sind zur Drehung des Nockens in eine Endblockierstellung für den Schwinghebel.

2. Verriegelungsvorrichtung nach Anspruch 1, dadurch gekennzeichnet, daß das männliche Element die Form eines Kegels (1) mit abgerundeter Spitze besitzt, die dem weiblichen Element zugewandt ist, welches die Form eines Kegelstumpfes (2) besitzt, die derart zugeordnet ist, daß die abgerundete Spitze des männlichen Kegels den weiblichen Kegelstumpf vollständig durchdringen kann, um eine Kraft auf das Hebelsystem bzw. die Hebelsysteme (3) auszuüben.

3. Verriegelungsvorrichtung nach Anspruch 1 oder 2, dadurch gekennzeichnet, daß der Nocken (10) mit dem Schwinghebel eine Kontaktzone aufweist mit zwei sich kreuzenden Schrägflächen, die dazu bestimmt sind, in der Blockierstellung mit einem abgerundeten Profil des Schwinghebels derart zusammenzuwirken, daß besagter Nocken eine gewisse Spielverringerung und eine Sicherung durch zunehmende Blockierung im Falle einer unzeitigen Beanspruchung des Zapfens (14) zuläßt.

4. Verriegelungsvorrichtung nach einem der Ansprüche 1 bis 3, dadurch gekennzeichnet, daß der Zapfen (14) eine Schrägfläche aufweist, derart, daß er eine Spielverringerung bewirkt sowie ein Einpressen des männlichen Elementes in das weibliche Element im Laufe seiner Verriegelungsbewegung.

5. Verriegelungsvorrichtung nach einem der Ansprüche 1 bis 4, dadurch gekennzeichnet, daß ein elastisches Mittel (18) vorgesehen ist zum zeitweisen Zurückhalten des Zapfens (14) in der Entriegelungsstellung, wobei besagtes Mittel im Laufe der Verriegelungsbewegung des Zapfens seine Wirkung löscht oder beendet.

6. Verriegelungsvorrichtung nach einem der Ansprüche 1 bis 5, dadurch gekennzeichnet, daß das Hebelsystem mindestens einen zum Kontakt mit dem männlichen Element bestimmten Hebel (3) aufweist, der gelenkig an einer Stange (7) befestigt ist, die selbst gelenkig einerseits mit einem der Enden des Schwinghebels (8) und andererseits mit dem Nocken (10) verbunden ist.

7. Verriegelungsvorrichtung nach Anspruch 6, dadurch gekennzeichnet, daß die Stange (7) am Nocken (10) mittels einer Achse (9) angelenkt ist, die kraftschlüssig mit besagter Stange verbunden ist und die einen Schlitz (11) durchsetzt, welcher in besagtem Nocken derart angeordnet ist, daß die Deblockierung des Nockens durch die Entriegelungsmittel (26, 27) erreicht wird, welche eine Drehung des Nockens bewirken, die umgekehrt in Bezug auf die Blockierungsdrehung verläuft, wobei sich besagte Achse (9) von einem Ende des Schlitzes zum anderen Ende bewegt bevor sie unter der Einwirkung des elastischen Mittels (20) im Lauf der Trennung der beiden Körper in ihre Ausgangsposition zurückkehrt.

8. Verriegelungsvorrichtung nach Anspruch 6 oder 7, dadurch gekennzeichnet, daß die Vorrichtung zwei Hebelsysteme (3), zwei Schwinghebel (8), zwei Stangen (7) und zwei Nocken (10) aufweist, die symmetrisch in zwei parallelen Ebenen angeordnet sind und das elastische Mittel (20) zwischen den Hebelsystemen und den Nocken befestigt ist, während eine gemeinsame Achse (6) die beiden Hebelsysteme verbindet, mit der jeweils eines der Enden der beiden Stangen (7) gelenkig verbunden ist.

9. Verriegelungsvorrichtung nach Anspruch 8, dadurch gekennzeichnet, daß das elastische Mittel eine Druckfeder (20) ist, die zwischen der gemeinsamen Achse (6) der Hebelsysteme und einem Bügel (22) befestigt ist, der sich unter der Wirkung besagter Feder (20) in ständigem Kontakt mit den beiden Nocken (10) befindet, während die Gelenkachsen (9) der Nocken mit den Stangen sich in Schlitzen (23), die im Bügel vorgesehen sind, in gleicher Weise hin- und herbewegen können.

Fig. 1

# Fig. 2

0 110 743

Fig. 3

# Fig. 4

0 110 743

Fig. 5

## Fig. 6

## Fig. 7